(19) Europäisches Patentamt
European Patent Office
Office européen des brevets

(11) EP 3 194 759 B1

(12) EUROPEAN PATENT SPECIFICATION

(45) Date of publication and mention of the grant of the patent:
**23.06.2021 Bulletin 2021/25**

(21) Application number: **15841843.4**

(22) Date of filing: **13.09.2015**

(51) Int Cl.:
***F03B 1/04** (2006.01)* ***F03B 11/00** (2006.01)*
***F03B 13/00** (2006.01)*

(86) International application number:
**PCT/IL2015/050936**

(87) International publication number:
**WO 2016/042552 (24.03.2016 Gazette 2016/12)**

(54) **IN- TANK TURBINES METHODS**

VERFAHREN FÜR TURBINEN IN EINEM TANK

PROCÉDÉS DE TURBINES INTÉGRÉES DANS DES RÉSERVOIRS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.09.2014 US 201462050226 P**

(43) Date of publication of application:
**26.07.2017 Bulletin 2017/30**

(73) Proprietor: **Leviathan Energy Hydroelectric LLC**
**99190 Beit Shemesh (IL)**

(72) Inventor: **FARB, Daniel**
**99543 Beit Shemesh (IL)**

(74) Representative: **Modiano, Micaela Nadia et al**
**Modiano & Partners**
**Thierschstrasse 11**
**80538 München (DE)**

(56) References cited:
**WO-A2-2011/158184** **WO-A2-2011/158184**
**US-A- 4 488 055** **US-A- 4 950 130**
**US-A1- 2004 126 223** **US-A1- 2006 045 733**

- **None**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 194 759 B1

## Description

TECHNICAL FIELD

The present invention relates to tanks that envelope closed turbine systems. Examples for such systems can be found in US 2004/126223 A1 or WO 2011/158184 A2.

SUMMARY OF THE INVENTION

The present invention provides methods for ensuring that an air space, also called a "lighter fluid space," these terms used interchangeably herein, interacts with a tank in which the turbine is enveloped, and the water, also called a "heavier fluid space," these terms used interchangeably herein, level of the tank to (1) achieve the desired effect of achieving as close to a steady state as possible, adjusting to various pressure scenarios, preventing backpressure water from impinging on the rotor blades, and preventing the introduction of air into the downstream pipe, and (2) enable the construction of the tank in such a way to work with the airspace to achieve the above objectives.

The invention discloses significant variables that enable the correct fluid configuration for such a system to work. Some of these variables include (1) the tank shape and volume, (2) the placement of the inlet and outlet pipes, and (3) the volume ratios of the fluids according to a formula. These 3 factors can, and should be, customized for each installation of the hydro in-pipe system. Part of this customization is based on the pressure change range likely to be found in a particular location. This range is taken into account in the formula. It is important because pressure can vary in piping systems.

The benefits of this process are that an equilibrium state can be achieved, thereby avoiding the need for continuous infusion of lighter fluid, and the confining of the heavier fluid to an area above the outlet pipe and below the rotor. If the heavier fluid is too low, then the lighter fluid escapes into the downstream piping system, thereby ruining both the conservation of the lighter fluid and the purity of the downstream heavier fluid. If the heavier fluid is too high, then it interferes with rotor efficiency.

The current invention also provides methods for varying tank volume in the presence of a standard inlet and outlet pipe configuration that will work for a certain range of flow and pressure inputs, by enabling a modular tank extension to be attached on the side of the main tank. Making a system whereby the location of the inlet and outlet pipes can be easily adjusted is also possible, and is included as part of the current invention, but as a practical matter, it is not as easy as varying the tank volume at the right level, as the variation of tank volume can occur at any level.

The present invention successfully addresses the shortcomings of the presently known configurations by providing a specific approach for handling the tank and fluid design within the context of a transport system of a heavier fluid that contains a space of lighter fluid, and the conditions for providing such a space that will not depend on continuous operation of a compressor that provides the lighter fluid to the tank interior. Such a steady state should be able to operate for at least one minute without additional injection of a lighter fluid.

The present invention discloses a method according to the appended claim 1.

According to another embodiment, the predefined ratio maintains the interface of the lighter fluid and the heavier fluid in the variable space at different levels for different pressures.

According to another embodiment, the predefined ratio of the variable and non-variable space maintains the interface of the lighter fluid and the heavier fluid at approximately a midpoint of the variable space.

According to another embodiment, the ratio is expressed as: The change in P(A) divided by P(A,0) is equal to [gamma times the change in height divided by h(L,0)] divided by [1 plus {V(b) divided by V (L,0)}], where P(A) is the pressure of the lighter fluid, P(A,0) is the pressure of the lighter fluid at equilibrium; gamma is a constant that is usually 1.2; h(L,0) is the height of the lighter fluid at equilibrium relative to the bottom part of the rotor, the change in height is the height of the lighter fluid relative to the bottom part of the rotor, wherein the term of [change in height divided by h(L,0)] is to be considered as less than 1 in order to avoid flooding of the rotor; V(B) is the lighter fluid volume in the non-variable space, V(L,0) is the volume of lighter fluid in the variable space at a steady state.

According to another embodiment, the heavier fluid is water and the lighter fluid is air.

According to another embodiment, the heavier fluid is oil and the lighter fluid is air.

According to another embodiment, the heavier fluid is a gas and the lighter fluid is a light gas.

In one embodiment, the method further comprises:

g. Defining the tank dimensions and the lighter fluid volume according to the combination of formulas 1 and 2 as follows, by connecting the sensor and the input nozzle to a microprocessor: The change in P(A) divided by P(A,0) is equal to [gamma times the change in height divided by h(L,0)] divided by [1 plus {V(b) divided by V (L,0)}], where P(A) is the pressure of the lighter fluid, P(A,0) is the pressure of the lighter fluid at equilibrium; gamma is a constant that is usually 1.2; h(L,0) is the height of the lighter fluid at equilibrium relative to the bottom part of the rotor, the change in height is the height of the lighter fluid relative to the bottom part of the rotor, wherein the term of [change in height divided by h(L,0)] is to be considered as less than 1 in order to avoid flooding of the rotor; V(B) is the lighter fluid volume in the non-variable space, V(L,0) is the volume of lighter fluid in the variable space at a steady state.

In one embodiment, the method further comprises:

h. Setting the height of the input and output pipes in relationship to each other in order to change the levels in the allowed variable space.

According to another embodiment, the setting of the tank space is accomplished through the process of building the first tank with an opening on the side to which can be attached removably second tank modules of different shapes and sizes in communication with the first tank to allow the desired range of lighter fluid volume.

The invention also discloses a method of maintaining a steady state equilibrium, defined as not requiring further injection of a lighter fluid for a time of at least one minute, of the volumes of lighter and heavier fluids within a tank that contains a rotor, said tank having input and output pipes conveying the heavier fluid, with the input pipe at a level above the output pipe, and said tank contains an inlet for conveying the lighter fluid into the tank, and said tank contains a height sensor, comprising: A microprocessor programmed with the following formula to provide a specific volume of each fluid: The change in P(A) divided by P(A,0) is equal to [gamma times the change in height divided by h(L,0)] divided by [1 plus {V(b) divided by V (L,0)}], where P(A) is the pressure of the lighter fluid, P(A,0) is the pressure of the lighter fluid at equilibrium; gamma is a constant that is usually 1.2; h(L,0) is the height of the lighter fluid at equilibrium relative to the bottom part of the rotor, the change in height is the height of the lighter fluid relative to the bottom part of the rotor, wherein the term of [change in height divided by h(L,0)] is to be considered as less than 1 in order to avoid flooding of the rotor; V(B) is the lighter fluid volume in the non-variable space, V(L,0) is the volume of lighter fluid in the variable space at a steady state.

It is now disclosed for the first time a method of achieving equilibrium of a lighter and a heavier fluid in a tank by keeping the blades of a rotor inside a tank clear of the heavier fluid by changing the volume of the lighter fluid located between the heavier fluid in the tank and the lowest point of the rotor, comprising;

a. Setting the parameters of the pressure variation for the specific system
b. Constructing the tank shape and volume and the levels of the inlet and outlet pipes so that the equilibrium point is always in the variable space.

According to another embodiment of the method above, the tank shape and volume are constructed so that the variable space has a margin of error of at least 0.5 atmospheres of pressure.

## BRIEF DESCRIPTION OF THE DRAWINGS

Some embodiments of the present invention are herein described, by way of example only, with reference to the accompanying drawings. With specific reference to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

Attention is now directed to the drawings, where like reference numerals or characters indicate corresponding or like components. In the drawings:

Figure 1 is a diagram of an in-pipe hydroelectric turbine with fluid inside.
Figure 2 is a diagram of some of the important formulas used here.
Figure 3 is a diagram of a modular tank attachment.
Figure 4 is a diagram of a modular tank attachment from another perspective.
Figure 5 is a diagram of a modular tank attachment that only uses part of the side.

## DETAILED DESCRIPTION OF THE INVENTION

The present invention refers to methods for obtaining energy from excess pressure and/or flow in a closed piping system.

The principles and operation of an in-pipe hydro turbine tank according to the present invention may be better understood with reference to the drawings and the accompanying description. According to the present inventions there are provided several devices and methods of organizing the tank in which the turbine is presented, and the contents of the tank.

Referring now to the drawings. Figure 1 illustrates a hydro tank with water levels. It is a cross sectional view. A casing (1) attached to a rotor casing (2) comprises the exterior. An entrance nozzle (5) allows fluid to enter the tank and impinge on the rotor blades, the periphery of which is symbolized figuratively as (3). It has a shaft (4), which connects to a generator to produce mechanical energy and optionally electricity. The fluid exits at (9). The general water level is (6). (7) is a higher water level; (8) is a lower water level at condition "0" described below. The height of (7) minus (6) is referred to as V(L) ("V sub L"). The airspace (10) is referred to as V(B) ("V sub B"). (6) minus (8) is delta h. (11) shows the input air (or lighter fluid) nozzle, which is attached to a compressor or other means of injection. It does not have to be at the exact location shown. (12) shows a height sensor.

The creation of an air phase or bubble (or lighter fluid) in the turbine area is important for the functioning of the turbine at high efficiency. The changes in pressure to maintain the air bubble and the exit pressure are obtained by changing the volume of the bubble, which is the equivalent of changing the water level. The water level ideally has to stay between the lowest rotor cup level (7) and the upper part of the outlet pipe level (8). This is a method of operation of the turbine system involving the control of the nozzle (11) and compressor, and can be accomplished both manually and by use of a microprocessor with memory. The formula for arriving at the correct parameters is derived below for the case of air and water.

Va,0 is the volume of air at equilibrium.

Q0 is the flow at equilibrium.

Pa,0 is the pressure in the air at equilibrium.

Ha,0 is the height from the bottom of the cups (7) to the water level (8).

For delta Pa to change, delta Va also has to change.

Gamma is usually 1.2. It is 1 for an isothermal process, 1.4 for an isentropic process.

Vb (1,0) is the air volume in the rotor level. We call this the "non-variable space" in the claims.

A natural bubble is an air bubble that, after its formation, no air is added to it (except for leakage compensation), so it is close to a steady-state equilibrium. The changes in pressure needed in the bubble, due to flow or pressure changes needed downstream, are obtained by changing the volume of the bubble (10), and thus by changing the water level (6, 7, or 8). It is clear that the water level is limited in its upper part by the demand not to block the rotor cups (7) and on its lower part by the output pipe height (8).

Next, assuming that at state zero ("0")' the flow is $Q_0$, the total volume of the air in the bubble is $V_{A,0}$, the pressure in the bubble is $P_{A,0}$, and the water level (distance from the bottom of the cups, from [7] to [8]) is $h_{\alpha,ß}$ in order for the pressure in the bubble to change in the amount of $\Delta P_A$, (due to changes in the working conditions), the required change in the air bubble's volume is $\Delta V_A$ and the connection between them is:

$$\frac{\Delta P_A}{P_{A,0}} = -\gamma \frac{\Delta V_A}{V_{A,0}}$$

This is the figure for a change in pressure to occur.
Where $\gamma$ = 1.4 is for an isentropic process, $\gamma$ = 1 is for an isothermal process. It is common to use $\gamma$ = 1.2.

The total volume of the bubble is divided into two parts: a constant part (10) $V_B$ that includes the volume of the air up to the bottom part of the cups (7) (minimal air volume) and to the rest of the air volume $V_L$ (that changes according to the water level, that is [7] minus [6]), therefore: And in state "0"

$$V_{A,0} = V_B + V_{L,0}$$

Vb (L,0) is the minimal air volume. The rest of the air volume Vl ([7] minus [6]) changes according to the water level.
Va = Vb + Vl
V(L,0) is the volume of air under the rotor (3) at a steady state. The change in volume of air = change in volume of water.

Where $V_{L,0}$ is the air volume under the bottom of the rotor at state "0", and of course also satisfies:

$$\Delta V_A = \Delta V_L$$

Where $\Delta$ ("delta") represents difference (difference in respective volumes).
There is also the connection:

$$V_L = V_{L,0} + \Delta V_L = A_L(h_{L,0} - \Delta h)$$

$A_L$ is the cross section of the tank (under the bottom part of the rotor) and $\Delta h = h_{L,0} - h_L$, $h_L$ is the water level (relative to the bottom part of the rotor)
when $A_L$ is the cross section of the tank (under the bottom part of the rotor) and $\Delta k = h_{L,0} - h_L$, $h_L$ is the water level (relative to the bottom part of the rotor)

Therefore

$$\frac{\Delta V_A}{V_{A,0}} = \frac{\Delta V_L}{V_{L,0} + V_B} = -\frac{A_L \Delta h}{A_L h_{L,0} + V_B}$$

Because $V_{L0} = A_L h_{L,0}$ and therefore

$$\frac{\Delta V_A}{V_{A,0}} = -\frac{\Delta h / h_{L,0}}{1 + V_B / V_{L,0}}$$

Using Equation (1), the formula is as follows:

$$\frac{\Delta P_A}{P_{A,0}} = \frac{\gamma \Delta h / h_{L,0}}{1 + V_B / V_{L,0}}$$

The changes in the required volume are now equated to the changes in flow. A popular connection between flow and pressure drop is: $\Delta P = CQ^n$ where C is constant (the resistance) and $2 \geq n \geq 1$. Usually $n \approx 2$ and therefore the changes in pressure in the air bubble due to flow changes versus the flow at state "0" is given by

$$\Delta P_A = C(Q^n - Q_0^n)$$

The pressure in the bubble at state "0" is determined by the atmospheric pressure $P_{atm}$, the pressure downstream $P_D$ and the resistance downstream $P_R$ meaning:

$$P_{A,0} = P_{atm} + P_D + P_R = P_{atm} + P_D + CQ_0^n$$

Therefore

$$\frac{C(Q^n - Q_0^n)}{P_{atm} + P_D + CQ_0^n} = \frac{\gamma \frac{\Delta h}{h_{L,0}}}{1 + \frac{V_B}{V_{L,0}}}$$

$$\frac{\Delta h}{h_{L,0}} = \frac{C}{\gamma}\left(1 + \frac{V_B}{V_{L,0}}\right)\frac{Q^n - Q_0^n}{P_{atm} + P_D + CQ_0^n}$$

And to avoid overflow, the pressure should be in accordance with the formula:

$$\frac{\Delta h}{h_{L,0}} < 1$$

Assuming that at condition "0" the flow is $Q_0 \approx 0$ the condition for non-flooding will be:

$$\frac{\Delta h}{h_{L,0}} = \frac{C}{\gamma}\left(1 + \frac{V_B}{V_{L,0}}\right)\frac{Q^n}{P_{atm} + P_D} < 1$$

Meaning

$$Q^n < \frac{\gamma}{C}\,\frac{P_{atm} + P_D}{1 + \frac{V_B}{V_{L,0}}}$$

$$V_L = V_{L,0} + \Delta V_L = A_L\left(h_{L,0} - \Delta h\right)$$

$$V_L = V_{L,0} + \Delta V_L = A_L\left(h_{L,0} - \Delta h\right)$$

Because $V_{L,0} = A_L h_{L,0}$ and therefore

$$\frac{\Delta V_A}{V_{A,0}} = -\frac{\Delta h / h_{L,0}}{1 + V_B / V_{L,0}}$$

And if Formula (1) is used, the following relation is obtained:

$$\frac{\Delta P_A}{P_{A,0}} = \frac{\gamma\, \Delta h / h_{L,0}}{1 + V_B / V_{L,0}}$$

A well-known connection between flow and pressure drop is: $\Delta P = CQ^n$ where C is constant (the resistance) and $2 \geq n \geq 1$. Usually $n \approx 2$ and therefore the changes in pressure in the air bubble due to flow changes versus the flow at state "0" is given by

$$\Delta P_A = C\left(Q^n - Q_0^n\right)$$

The pressure in the bubble at state "0" is determined by the atmospheric pressure $P_{atm}$, the pressure downstream $P_D$, and the resistance downstream $P_R$ meaning:

$$P_{A,0} = P_{atm} + P_D + P_R = P_{atm} + P_D + CQ_0^n$$

$$\frac{C(Q^n - Q_0^n)}{P_{atm} + P_D + CQ_0^n} = \frac{\gamma \frac{\Delta h}{h_{L,0}}}{1 + \frac{V_B}{V_{L,0}}}$$

$$\frac{\Delta h}{h_{L,0}} = \frac{C}{\gamma}\left(1 + \frac{V_B}{V_{L,0}}\right)\frac{Q^n - Q_0^n}{P_{atm} + P_D + CQ_0^n}$$

These relations determine the flow that will flood the turbine.
To avoid overflow, pressure should be in accordance with the formula:

$$\frac{\Delta h}{h_{L,0}} < 1$$

The volume of the air in the tank must follow this connection, referred to in the claims as Formula 1:

$$\frac{\Delta P_A}{P_{A,0}} = \frac{\gamma \Delta h / h_{L,0}}{1 + V_B / V_{L,0}}$$

If, (for example), a backpressure of 2-4 atmospheres is required, then we set $P_{A,0}$ = 3atm (meaning that while building the bubble the air will be pressurized to this value). Then $\Delta P_A$ = 1atm, and if the value $\gamma = 1$ is selected and demand for the system not to be flooded, meaning $\frac{\Delta h}{h_{L,0}} < 1,$ referred to as Formula 2, then, the relation is created, as follows:

$$\frac{1}{3} < \frac{1}{1 + V_B / V_{L,0}},$$ meaning $V_{L,0} > 2V_B$.

In other words, the volume under any of the levels (6, 7, and 8), should be at least double that of volume (10) for that system.

In another example, if the back pressure (also called "exit pressure") is required to be 1-5 atmospheres, then 2/3 is less than the ratio shown so that V (L,0) > 4V(B).

It is normal for water systems to have variations in pressure. There is no other system that deals with this variation in order to regulate an electricity production system of high efficiency throughout the variations. It rarely occurs that a pump will be put in a water conveyance system, but its performance decays with variations in pressure and flow rate.

In order to accommodate variations in pressure, for example, the water level may be the anticipated mid-point of the pressure in a particular installation (6).

Figure 2 shows the important formulas 1 and 2,

A specific structure is required for this, and the above describes as well a method for achieving any of a choice of steady states.

The state will not be completely steady, as some gas will mix with the fluid and escape. We mean that the system will remain functioning for a relatively long period of time, such that an occasional burst from an air compressor, instead of steady input from an air compressor, will be all that is required.

Figure 3 shows how a tank (13) can have a modular tank (14) of any size attached on the side through an attachment interface area (15) with means such as bolts, so its size is easily variable and replaceable in the production of the turbines, is beneficial. This means that a standard system can be built, but the volume of either fluid in the tank can be altered for each specific project. The volume of both fluids can be affected by adding an entire side; the volume of just one of the fluids can be affected by adding part of a side at a certain vertical level.

Figure 4 shows a different perspective of the modular tank (16) and the attachment interface (17). This modular design enables attachment of various structural shapes to the basic tank, and can make the production of systems that match the results of the formula above easier to accomplish. There is also a method for applying the formula for maintaining the bubble in the tank design. The attachment interface area can also be on the bottom or upper part of the tank, but is not shown here.

Figure 5 shows how the attached module need not be attached to the whole side of the original tank in order to provide more volume for the lighter fluid. (18) represents the standard tank, and (19) is the attached tank. Its attachment as shown is not symmetrical on the side. It is meant to provide extra volume for the lighter fluid only.

The module is one embodiment and is more efficient from a mass production and shipping point of view. However, the simplest embodiment of the solution for the problem addressed in this application is to make the first tank the size needed for the particular project. A more complicated solution is to make flexible pipe inlet or pipe outlet structures, and to combine these with the addition of a tank module. These options are available according to the current description, but they are not illustrated in the figures due to practicality.

In summary, the invention shows how to set up a steady state of lighter fluid for a particular pressure situation, and how to construct the tank, pipes, and microprocessor accordingly and in conjunction with any one or more of the others in order to create a steady state for the lighter fluid.

There is typically some mixing of fluids, and some negligible loss, however, the invention is such that the system avoids the need to continuously supply a light fluid.

While the invention has been disclosed for water systems using an inlet of lighter air, particularly water transport via piping systems, this is exemplary only. The invention is also applicable for any system where the rotor is surrounded by a lower density fluid than the substance being transported. For example, the invention is also applicable to air in an oil transport system, and helium in a gas transport system.

While the invention has been described with respect to a limited number of embodiments, it will be appreciated that many variations, modifications and other applications of the invention may be made.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications, and variations that fall within the scope of the appended claims.

## Claims

1. A method of adjusting fluid volumes of a lighter and a heavier fluid in a tank (1, 2) which envelopes a turbine rotor (3,4), the tank including at least one inlet (5) for the heavier fluid to flow along a path for moving the rotor (3,4), at least one outlet (9) for the heavier fluid to exit at a level below that of the inlet (5), at least one inlet (11) for the lighter fluid, comprising:

    a. Sensing the level of the heavier fluid in the tank (1,2) and correlating the level of the heavier fluid with the volume and shape of the tank (1, 2) and the position of the rotor (3, 4) in the tank (1, 2), such that the level of the heavier fluid remains below the rotor (3, 4),
    b. Determining the volume of the space of the lighter fluid between the bottom of the rotor (3, 4) and an upper level (7) of the heavier fluid, called the volume V(L) of the lighter fluid variable space, by subtracting the volume of the lighter fluid space from the rotor's lowest point upwards, called the volume V(B) of the lighter fluid non-variable space, from the available volume of the tank, defined as not including any solid structures such as the rotor within the tank, minus the volume of the heavier fluid,
    and determining a predefined ratio of the volume V(L) of the variable space and of the volume V(B) of the non-variable space such as to maintain a level of the heavier fluid in the variable space for a set up of a steady state,
    c. Adjusting the pressure of the lighter fluid through lighter fluid input at its inlet (11) in response to the sensed level of the heavier fluid in accordance with the predefined ratio of the volumes V(L) and V(B) of the variable and non-variable spaces, to maintain the level of the heavier fluid in the volume V(L) of the variable space and achieve a steady state equilibrium of the volumes of lighter and heavier fluids within the tank (1, 2) not requiring further lighter fluid injection,
    d) Defining the tank dimensions and setting the lighter fluid volume according to the conditions of Formulas 1 and 2, wherein

    Formula 1, being $\frac{\Delta P_A}{P_{A,0}} = \frac{\gamma \Delta h / h_{L,0}}{1+V_B/V_{L,0}}$ has the purpose of setting the volume of the lighter fluid, and is expressable in words as: the change in P(A) divided by P(A,0) is equal to [gamma times the change in height divided by h(L,0)] divided by [1 plus {V(b) divided by V (L,0)}],
    wherein P(A) is the pressure of the lighter fluid, P(A,0) is the pressure of the lighter fluid at the equilibrium, wherein V(B) is the lighter fluid volume in the non-variable space, V(L,0) is the volume of lighter fluid in the variable space at the steady state.

wherein gamma is a constant that is usually 1.2 in the case of turbines, as it ranges from 1 for an isothermal process to 1.4 for an isentropic process;
wherein h(L,0) is the height of the lighter fluid at the equilibrium relative to the bottom part of the rotor, the change in height is the height of the lighter fluid relative to the bottom part of the rotor;

and Formula 2 being $\frac{\Delta h}{h_{L,0}} < 1,$ wherein a condition for determining the height of the heavier fluid for the system not to be flooded, is inserted into the numerator of the right side of Formula 1 to solve Formula 1 for a specific case for the conditions required to maintain the equilibrium,
wherein the solution is for conditions to be less than a certain ratio of V(B) and V(L), Formula 2 being expressable in words as the condition that [change in height divided by h(L,0)] is to be considered as less than 1 in order to avoid flooding of the rotor, operative to determine a volume ratio that creates the equilibrium, and
e. Providing a microprocessor in communication with a sensor (12) for sensing the height level of the heavier fluid, operative to calculate the volume of the lighter fluid from the bottom of the rotor (3, 4) to the heavier fluid level, compare it to the lighter fluid volume from the lowest point of the rotor and up, and adjust their volumes in conjunction with Formulas 1 and 2 under the condition that the light and heavy fluid interface remains in the variable space.

**2.** The method of claim 1, wherein the predefined ratio maintains the interface of the lighter fluid and the heavier fluid in the variable space at different levels for different pressures.

**3.** The method of claim 1, wherein the predefined ratio of the variable and non-variable space maintains the interface of the lighter fluid and the heavier fluid at approximately a midpoint of the variable space.

**4.** The method of claim 3, where the ratio of the variable and non-variable space is expressed as the combination of Formulas 1 and 2.

**5.** The method of claim 1, wherein the heavier fluid is water and the lighter fluid is air.

**6.** The method of claim 1, wherein the heavier fluid is oil and the lighter fluid is air.

**7.** The method of claim 1, wherein the heavier fluid is a gas and the lighter fluid is a lighter gas.

**8.** The method of claim 1, further comprising:
e. Setting the height of the inlet (5) and outlet (9) in relationship to each other in order to change the levels in the allowed variable space.

**9.** The method of claim 1, wherein the setting of the tank space is accomplished through the process of building a first tank (15, 18) with an opening on the side to which can be attached removably second tank modules (14, 16, 19) of different shapes and sizes in communication with the first tank to allow the desired range of lighter fluid volume.

**10.** The method of claim 1, further comprising:

f. Setting the parameters of the pressure variation for the specific system,
g. Constructing the tank shape and volume and the levels of the inlet and outlet pipes so that the equilibrium point is always below the rotor in the lighter fluid variable space, defined as the volume of the space of the lighter fluid between the bottom of the rotor and the upper level of the heavier fluid.

**11.** The method of claim 10, wherein the tank shape and volume are constructed so that the variable space has a margin of error of the level equivalent to at least 0.5 atmospheres (50.6625 kPa) of pressure.

**Patentansprüche**

**1.** Ein Verfahren zur Anpassung der Fluidvolumina eines leichteren und eines schwereren Fluids in einem Tank (1, 2), der einen Turbinenrotor (3, 4) umgibt, wobei der Tank Folgendes einschließt: mindestens einen Einlass (5) für das schwerere Fluid, zum Strömen entlang einem Pfad zum Bewegen des Rotors (3, 4); mindestens einen Auslass (9) für das schwerere Fluid, zum Austreten auf einem Niveau unterhalb desjenigen des Einlasses (5); mindestens einen Einlass (11) für das leichtere Fluid; Folgendes umfassend:

a. das Erfassen des Niveaus des schwereren Fluids im Tank (1, 2) und das Korrelieren des Niveaus des schwereren Fluids mit dem Volumen und der Form des Tanks (1, 2) und der Position des Rotors (3, 4) im Tank (1, 2), so dass das Niveau des schwereren Fluids unterhalb des Rotors (3, 4) bleibt;
b. das Bestimmen des Volumens des Raums des leichteren Fluids zwischen dem Boden des Rotors (3, 4) und einem oberen Niveau (7) des schwereren Fluids, genannt das Volumen V(L) des variablen Raums des leichteren Fluids, durch Subtrahieren des Volumens des Raumes des leichteren Fluids vom niedrigsten Punkt des Rotors aufwärts, genannt das Volumen V(B) des nicht variablen Raumes des leichteren Fluids, vom verfügbaren Volumen des Tanks, definiert als keine festen Strukturen, wie den Rotor im Tank, einschließend, minus das Volumen des schwereren Fluids;
und das Bestimmen eines vordefinierten Verhältnisses des Volumens V(L) des variablen Raums und des Volumens V(B) des nicht variablen Raums, um zum Einstellen eines stabilen Zustands ein Niveau des schwereren Fluids im variablen Raum aufrechtzuerhalten;
c. das Anpassen des Drucks des leichteren Fluids durch das Einlassen des leichteren Fluids an seinem Einlass (11) als Reaktion auf das erfasste Niveau des schwereren Fluids entsprechend dem vordefinierten Verhältnis der Volumina V(L) und V(B) des variablen und des nicht variablen Raums, um das Niveau des schwereren Fluids im Volumen V(L) des variablen Raums aufrechtzuerhalten und ein stabiles Gleichgewicht der Volumina des leichteren und des schwereren Fluids im Tank (1, 2) zu erzielen, das kein weiteres Einspritzen leichteren Fluids erfordert;
d. das Definieren der Abmessungen des Tanks und das Festlegen des Volumens des leichteren Fluids entsprechend den Bedingungen in den Formeln 1 und 2, worin

Formel 1, $$\frac{\Delta P_A}{P_{A,0}} = \frac{\gamma \Delta h / h_{L,0}}{1+V_B/V_{L,0}}$$ ,

den Zweck hat, das
Volumen des leichteren Fluids festzulegen,
und in Worten ausgedrückt werden kann wie folgt: die Änderung in P(A), geteilt durch P(A,0), ist gleich [gamma mal die Änderung der Höhe, geteilt durch h(L,0)], geteilt durch [1 plus {V(b), geteilt durch V(L,0)}],
worin P(A) der Druck des leichteren Fluids ist, P(A,0) der Druck des leichteren Fluids bei Gleichgewicht ist,
worin V(B) das Volumen des leichteren Fluids im nicht variablen Raum ist, V(L,0) das Volumen des leichteren Fluids im variablen Raum im stabilen Zustand ist,
worin gamma eine Konstante ist, die bei Turbinen normalerweise 1,2 beträgt, da sie innerhalb einer Bandbreite von 1 bei einem isothermen Verfahren bis 1,4 bei einem isentropen Verfahren liegt,
worin h(L,0) die Höhe des leichteren Fluids bei Gleichgewicht relativ zum unteren Teil des Rotors ist, die Änderung der Höhe die Höhe des leichteren Fluids relativ zum unteren Teil des Rotors ist,
und

Formel 2 $$\frac{\Delta h}{h_{L,0}} < 1$$

ist,
wobei eine Bedingung zum Bestimmen der Höhe des schwereren Fluids, um das System nicht zu fluten, in den Zähler auf der rechten Seite von Formel 1 eingefügt wird, um Formel 1 für einen speziellen Fall für die Bedingungen zu lösen, die erforderlich sind, um das Gleichgewicht aufrechtzuerhalten,
wobei die Lösung für Bedingungen ist, unterhalb eines bestimmten Verhältnisses von V(B) und V(L) zu liegen,
wobei Formel 2 in Worten ausgedrückt werden kann als die Bedingung, dass [Änderung der Höhe, geteilt durch h(L,0)] als weniger als 1 zu betrachten ist, um ein Fluten des Rotors zu vermeiden, operativ, um ein Volumenverhältnis zu bestimmen, das das Gleichgewicht erzeugt, und

e. das Bereitstellen eines Mikroprozessors in Kommunikation mit einem Sensor (12) zum Erfassen des Höhenniveaus des schwereren Fluids, operativ zum Berechnen des Volumens des leichteren Fluids vom Boden des Rotors (3, 4) bis zum Niveau des schwereren Fluids, zum Vergleichen desselben mit dem Volumen des leichteren Fluids vom untersten Punkt des Rotors und nach oben, und zum Anpassen ihrer Volumina in Verbindung mit den Formeln 1 und 2 unter der Bedingung, dass die Grenzfläche zwischen dem leichten und dem schweren Fluid innerhalb des variablen Raums bleibt.

**2.** Das Verfahren gemäß Anspruch 1, wobei das vordefinierte Verhältnis die Grenzfläche des leichteren und des schwereren Fluids im variablen Raum bei verschiedenen Drücken auf verschiedenen Niveaus hält.

**3.** Das Verfahren gemäß Anspruch 1, wobei das vordefinierte Verhältnis zwischen dem variablen und dem nicht variablen Raum die Grenzfläche des leichteren und des schwereren Fluids ungefähr an einem Mittelpunkt des variablen Raums hält.

**4.** Das Verfahren gemäß Anspruch 3, wobei das Verhältnis zwischen dem variablen und dem nicht variablen Raum als Kombination der Formeln 1 und 2 ausgedrückt wird.

**5.** Das Verfahren gemäß Anspruch 1, worin das schwerere Fluid Wasser ist und das leichtere Fluid Luft ist.

**6.** Das Verfahren gemäß Anspruch 1, worin das schwerere Fluid Öl ist und das leichtere Fluid Luft ist.

**7.** Das Verfahren gemäß Anspruch 1, worin das schwerere Fluid ein Gas ist und das leichtere Fluid ein leichteres Gas ist.

**8.** Das Verfahren gemäß Anspruch 1, das weiter Folgendes umfasst:
e. das Festlegen der Höhe des Einlasses (5) und des Auslasses (9) im Verhältnis zueinander, um die Niveaus im zulässigen variablen Raum zu verändern.

**9.** Das Verfahren gemäß Anspruch 1, wobei das Festlegen des Tankraums erzielt wird durch den Prozess des Bauens eines ersten Tanks (15, 18) mit einer Öffnung an der Seite, an welchem zweite Tankmodule (14, 16, 19) verschiedener Formen und Größen in Austausch mit dem ersten Tank lösbar befestigt werden können, um die gewünschte Bandbreite des Volumens des leichteren Fluids zu ermöglichen.

**10.** Das Verfahren gemäß Anspruch 1, das weiter Folgendes umfasst:

f. das Festlegen der Parameter der Druckschwankung für das spezifische System,
g. das Konstruieren der Tankform und des Volumens und der Niveaus der Einlass- und Auslassrohre so, dass der Gleichgewichtspunkt sich immer unterhalb des Rotors im variablen Raum des leichteren Fluids befindet, definiert als das Volumen des Raums des leichteren Fluids zwischen dem Boden des Rotors und dem oberen Niveau des schwereren Fluids.

**11.** Das Verfahren gemäß Anspruch 10, wobei die Tankform und das Volumen so konstruiert sind, dass der variable Raum einen Fehlerbereich von der Größe hat, die äquivalent zu mindestens 0,5 Atmosphären (50,6625 kPa) Druck ist.

## Revendications

**1.** Procédé d’ajustement de volumes de fluide d’un fluide plus léger et d’un fluide plus lourd dans un réservoir (1, 2) qui enveloppe un rotor de turbine (3, 4), le réservoir comportant au moins une entrée (5) pour le fluide plus lourd lui permettant de s’écouler le long d’un chemin pour mouvoir le rotor (3, 4), au moins une sortie (9) pour le fluide plus lourd lui permettant de sortir à un niveau au-dessous de celui de l’entrée (5), au moins une entrée (11) pour le fluide plus léger, comprenant :

a. la détection du niveau du fluide plus lourd dans le réservoir (1, 2) et la corrélation du niveau du fluide plus lourd avec le volume et la forme du réservoir (1, 2) et la position du rotor (3, 4) dans le réservoir (1, 2), de manière que le niveau du fluide plus lourd reste au-dessous du rotor (3, 4),
b. la détermination du volume de l’espace du fluide plus léger entre le bas du rotor (3, 4) et un niveau supérieur (7) du fluide plus lourd, appelé volume V(L) de l’espace variable de fluide plus léger, par soustraction du volume de l'espace de fluide plus léger vers le haut à partir du point le plus bas du rotor, appelé volume V(B) de l'espace non variable de fluide plus léger, du volume disponible du réservoir, défini comme n'incluant aucune structure solide telle que le rotor à l'intérieur du réservoir, moins le volume du fluide plus lourd,
et la détermination d'un rapport prédéfini du volume V(L) de l'espace variable et du volume V(B) de l'espace non variable de manière à maintenir un niveau du fluide plus lourd dans l'espace variable pour l'établissement d'un régime permanent,
c. l'ajustement de la pression du fluide plus léger au moyen d'une introduction de fluide plus léger à son entrée (11) en réponse au niveau détecté du fluide plus lourd en fonction du rapport prédéfini des volumes V(L) et V(B) des espaces variable et non variable, pour maintenir le niveau du fluide plus lourd dans le volume V(L) de l'espace variable et atteindre un équilibre en régime permanent des volumes des fluides plus léger et plus lourd à l'intérieur du réservoir (1, 2) ne nécessitant pas d'injection de fluide plus léger supplémentaire,
d. la définition des dimensions du réservoir et le réglage du volume de fluide plus léger selon les conditions de Formules 1 et 2,
la Formule 1, qui est $\frac{\Delta P_A}{P_{A,0}} = \frac{\gamma \Delta h / h_{L,0}}{1+V_B/V_{L,0}}$, ayant pour but de régler le volume du fluide plus léger,
et pouvant être énoncée en mots comme étant : la variation de P(A) divisée par P(A, 0) est égale à [gamma fois la variation de hauteur divisée par h(L, 0)] divisé par [1 plus {V(b) divisé par V(L, 0)}],
P(A) étant la pression du fluide plus léger, P(A, 0) étant la pression du fluide plus léger à l'équilibre,
V(B) étant le volume de fluide plus léger dans l'espace non variable, V(L, 0) étant le volume de fluide plus léger dans l'espace variable en régime permanent,
gamma étant une constante qui vaut habituellement 1,2 dans le cas de turbines, dans la mesure où elle va de 1 pour un processus isotherme à 1,4 pour un processus isentropique ;
h(L, 0) étant la hauteur du fluide plus léger à l'équilibre par rapport à la partie basse du rotor, la variation de hauteur étant la hauteur du fluide plus léger par rapport à la partie basse du rotor ;
et la Formule 2 étant $\frac{\Delta h}{h_{L,0}} < 1$,
une condition pour déterminer la hauteur du fluide plus lourd pour que le système ne soit pas noyé étant insérée dans le numérateur du côté droit de la Formule 1 pour résoudre la Formule 1 dans un cas spécifique pour les conditions requises pour maintenir l'équilibre,
la solution étant pour des conditions d'être à moins d'un certain rapport de V(B) et V(L),
la Formule 2 pouvant être énoncée en mots comme étant la condition [la variation de hauteur divisée par h(L, 0)] doit être considérée comme inférieure à 1 afin d'éviter un noyage du rotor, servant à déterminer un rapport de volume qui crée l'équilibre, et
e. la fourniture d'un microprocesseur, en communication avec un capteur (12) destiné à détecter le niveau de hauteur du fluide plus lourd, servant à calculer le volume du fluide plus léger depuis le bas du rotor (3, 4) jusqu'au niveau du fluide plus lourd, à le comparer au volume de fluide plus léger vers le haut à partir du point le plus bas du rotor, et à ajuster leurs volumes conjointement avec les Formules 1 et 2 à condition que l'interface des fluides léger et lourd reste dans l'espace variable.

**2.** Procédé selon la revendication 1, dans lequel le rapport prédéfini maintient l'interface du fluide plus léger et du fluide plus lourd dans l'espace variable à différents niveaux pour différentes pressions.

**3.** Procédé selon la revendication 1, dans lequel le rapport prédéfini des espaces variable et non variable maintient l'interface du fluide plus léger et du fluide plus lourd approximativement à un point médian de l'espace variable.

**4.** Procédé selon la revendication 3, dans lequel le rapport des espaces variable et non variable est exprimé par la combinaison des Formules 1 et 2.

**5.** Procédé selon la revendication 1, dans lequel le fluide plus lourd est de l'eau et le fluide plus léger est de l'air.

**6.** Procédé selon la revendication 1, dans lequel le fluide plus lourd est de l'huile et le fluide plus léger est de l'air.

**7.** Procédé selon la revendication 1, dans lequel le fluide plus lourd est un gaz et le fluide plus léger est un gaz plus léger.

**8.** Procédé selon la revendication 1, comprenant en outre :
e. le réglage de la hauteur de l'entrée (5) et de la sortie (9) en relation l'une avec l'autre afin de faire varier les niveaux dans l'espace variable admissible.

**9.** Procédé selon la revendication 1, dans lequel le réglage de l'espace de réservoir est accompli au moyen du processus de construction d'un premier réservoir (15, 18) avec une ouverture sur le côté auquel peuvent être attachés de façon amovible des modules formant second réservoir (14, 16, 19) de différentes formes et tailles en communication avec le premier réservoir pour permettre la plage souhaitée de volume de fluide plus léger.

**10.** Procédé selon la revendication 1, comprenant en outre :

f. le réglage des paramètres de la variation de pression pour le système spécifique,
g. la construction de la forme et du volume du réservoir et des niveaux des canalisations d'entrée et de sortie de manière que le point d'équilibre soit toujours au-dessous du rotor dans l'espace variable de fluide plus léger, défini comme étant le volume de l'espace du fluide plus léger entre le bas du rotor et le niveau supérieur du fluide plus lourd.

**11.** Procédé selon la revendication 10, dans lequel la forme et le volume du réservoir sont construits de façon que l'espace variable ait une marge d'erreur du niveau équivalente à au moins 0,5 atmosphère (50,6625 kPa) de pression.

Figure 1

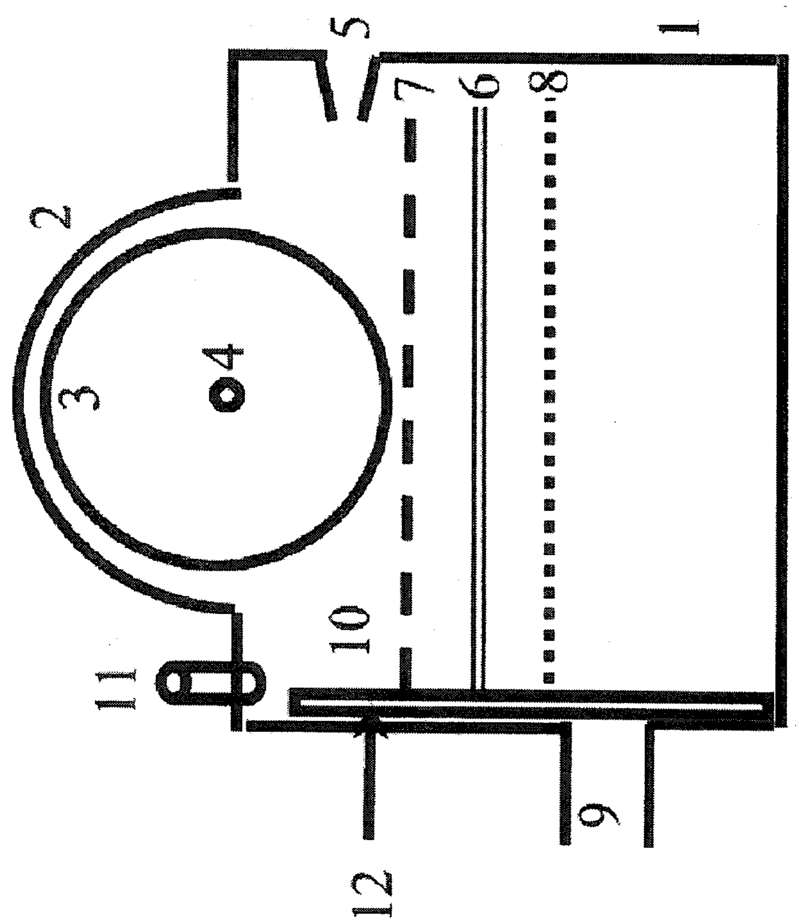

# Figure 2

$$\frac{\Delta P_A}{P_{A,0}} = \frac{\gamma \Delta h / h_{L,0}}{1 + V_B / V_{L,0}}$$

Formula 1

$$\frac{\Delta h}{h_{L,0}} < 1$$

Formula 2

Figure 3

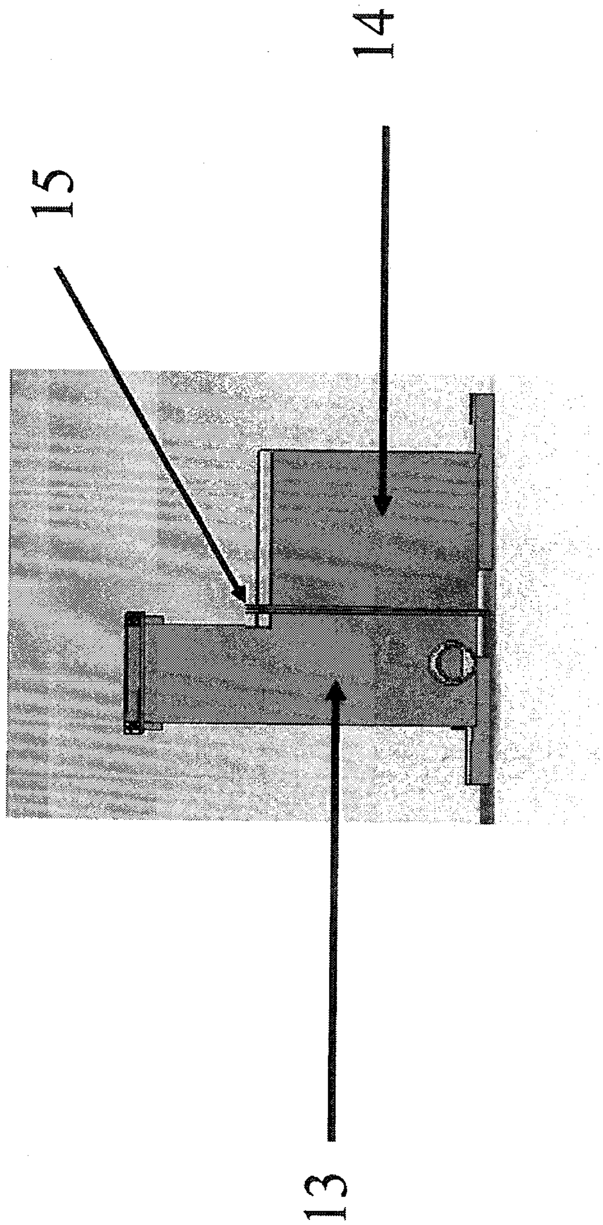

Figure 4

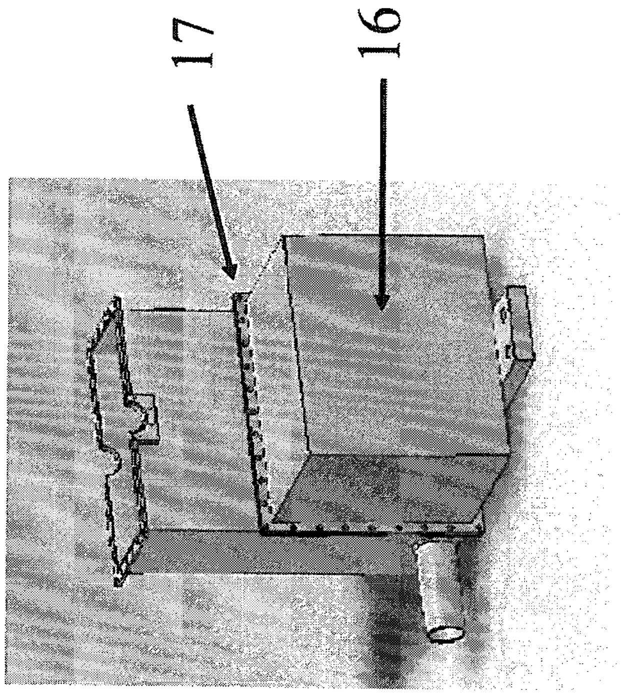

Figure 5

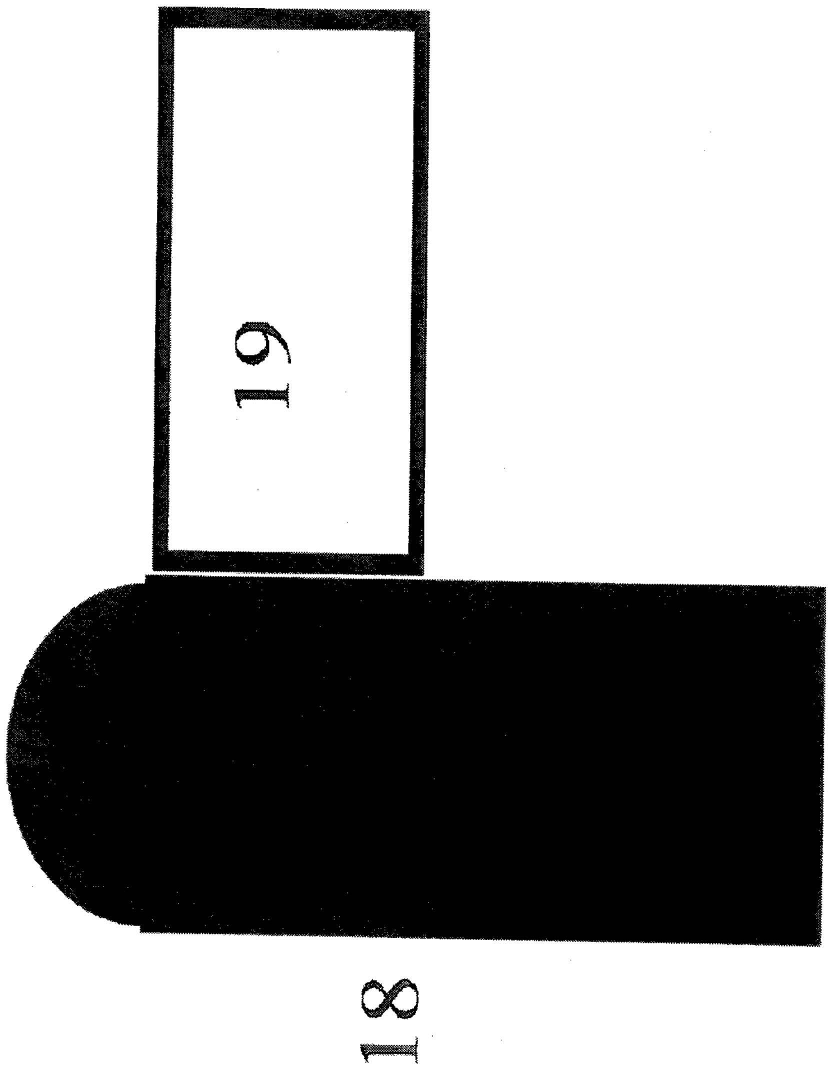

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2004126223 A1
- WO 2011158184 A2